**Europäisches Patentamt**

**European Patent Office**

**Office européen des brevets**

(19)

(11) Veröffentlichungsnummer: **0 025 570**
**B1**

(12) ## EUROPÄISCHE PATENTSCHRIFT

(45) Veröffentlichungstag der Patentschrift:
09.05.84

(51) Int. Cl.³: **G 01 B 3/10**

(21) Anmeldenummer: 80105312.5

(22) Anmeldetag: 05.09.80

(54) Verfahren zur Herstellung eines Messbandes.

(30) Priorität: 08.09.79 DE 2936393
09.02.80 DE 3004904

(43) Veröffentlichungstag der Anmeldung:
25.03.81 Patentblatt 81/12

(45) Bekanntmachung des Hinweises auf die Patenterteilung:
09.05.84 Patentblatt 84/19

(84) Benannte Vertragsstaaten:
FR GB SE

(56) Entgegenhaltungen:
DE - A - 1 800 011
DE - A - 2 142 499
DE - B - 1 303 422
DE - U - 7 236 062
US - A - 2 658 006

**Die Akte enthält technische Angaben, die nach dem Eingang der Anmeldung eingereicht wurden und die nicht in dieser Patentschrift enthalten sind.**

(73) Patentinhaber: **Meywald, Günter, D-3548 Arolsen (DE)**
Patentinhaber: **Meywald, Volker, Dipl.-Ing., Ostpreussenstrasse 72, D-3548 Arolsen (DE)**

(72) Erfinder: **Meywald, Günter, D-3548 Arolsen (DE)**
Erfinder: **Meywald, Volker, Dipl.-Ing., Ostpreussenstrasse 72, D-3548 Arolsen (DE)**

(74) Vertreter: **Patentanwälte Dipl.-Ing. Rudolf Bibrach Dipl.-Ing. Elmar Rehberg, Pütterweg 6 Postfach 738, D-3400 Göttingen (DE)**

EP 0 025 570 B1

## Beschreibung

Die Erfindung bezieht sich auf ein Verfahren zur Herstellung eines Messbandes aus einem hartgewalzten Rohband aus rostbeständigem Stahl, z.B. aus X 12 Cr Ni 17 7, wobei das Rohband auf der für das Aufbringen der Masseinteilung vorgesehenen Oberfläche durch Sandstrahlen aufgerauht und auf diese unebene Oberfläche die Masseinteilung aufgedruckt wird.

Messbänder der hier in Rede stehenden Art werden zu den verschiedensten Vermessungszwecken benötigt. Bei dem Messband handelt es sich um ein relativ dünnes, biegsames Metallband, welches bei Nichtgebrauch in Rollenform aufgewickelt wird. Es sind solche Messbänder bekannt, die aus dem Werkstoff X 12 Cr Ni 17 7 bestehen. Dieser Werkstoff besitzt den Vorteil, dass er rostbeständig ist. Weiterhin besitzt das Band eine gute Widerstandsfähigkeit gegen eine Biegebeanspruchung. Das Band selbst ist relativ dünn, so dass es auf einem kleinen Rollendurchmesser aufgewickelt werden kann. Das Band ist jedoch nur bedingt säurebeständig, so dass es durch Salze, die im Wasser gelöst sind, angegriffen werden kann. Dieser Angriff kommt beispielsweise im Winter vor, wenn Streusalze im Wasser aufgelöst auf das Band einwirken, wenn es beispielsweise zwischen zwei Messpunkten auf der Strasse entlanggezogen wird. Diese einwirkenden Säuren bewirken eine Wasserstoffversprödung bzw. setzen eine solche Versprödung fort, die bereits durch den Ätzvorgang der Masseinteilung begonnen wurde. Bisher bekannte Massbänder aus dem Werkstoff X 12 Cr Ni 17 7 besitzen nämlich eine Masseinteilung, die entweder durch Tiefätzung oder durch Hochätzung aufgebracht ist, wodurch sich ein Relief ergibt, dessen tiefliegende Ebene im Neuzustand grau und matt gegenüber der walzblanken Oberfläche der hochliegenden Ebene ist. Beide Ätzverfahren sind insofern nachteilig, als sie den Beginn der Wasserstoffversprödung einleiten.

An den geätzten Strichen der Masseinteilung tritt Kerbwirkung bei mechanischer Beanspruchung des Messbandes auf. Die bekannten Messbänder besitzen den weiteren Nachteil, dass die Masseinteilung durch Scheuern, z.B. beim Aufwickeln auf Rollen oder beim Ziehen des abgewikkelten Bandes auf der Erde, kontrastarm und dadurch schwer lesbar wird. In der Folge entstehen beim Gebrauch eines solchen schwer lesbaren Bandes mit vergrösserter Häufigkeit Messfehler, die die Ursache von weiteren, manchmal nicht unerheblichen Kosten sein können. Der Hauptnachteil der bekannten Bänder aus dem Werkstoff X 12 Cr Ni 17 7 ist aber in der masslichen Instabilität des Rohbandes im Lieferzustand zu sehen. Zwar werden die Rohbänder beim Hersteller des Rohbandes einer künstlichen Alterung unterworfen, jedoch wird hierdurch die massliche Instabilität nicht ausreichend beseitigt. Vielmehr lösen sich bei mechanischer und/oder thermischer Belastung des mit der Masseinteilung versehenen Messbandes in diesem Spannungen, die durch das Hartwalzen des Rohbandes enstanden sind. Dieses Lösen von Spannungen, welches auch als eine Art Alterung bezeichnet werden kann, lässt das Messband schrumpfen, so dass die geforderte Genauigkeit verlorengeht. Bei einem Messband aus dem Werkstoff X 12 Cr Ni 17 7 ist man also nie sicher, ob es noch die erforderliche Genauigkeit aufweist oder nicht. Aus diesem Grunde können solche Messbänder trotz ihres wünschenswerten Vorteils der Rostbeständigkeit und bedingten Säurebeständigkeit nur für untergeordnete Zwecke verwendet werden, bei denen es auf die Genauigkeit und Zuverlässigkeit nicht allzu sehr ankommt.

Ein Messband der angegebenen Art ist aus der DE-A-1 800 011 bekannt. Um das Messband blendfrei zu machen, wird das Rohband durch Sandstrahlen uneben gemacht, also aufgerauht. Auf diese unebene Oberfläche wird die Masseinteilung aufgedruckt oder durch Ätzung aufgebracht. Durch Anwendung verschieden grosser Granulate beim Sandstrahlen können die Einschläge auf der Oberfläche des Rohbandes verschieden gross gestaltet und damit verschiedene Effekte erreicht werden. Nach dem Bedrucken oder Ätzen kann das Messband mit einer Schutzlackierung versehen werden. Für die Erhöhung der Masshaltigkeit des Messbandes unter Langzeitbedingungen enthält diese Druckschrift keinen Hinweis.

Es ist weiterhin bekannt, Massbänder aus einem rostbeständigen, jedoch nur mit Chrom legierten Stahl, z.B. Werkstoff X 15 Cr 13 herzustellen. Derartige Messbänder sind aber anderseits anfälliger gegen Korrosion durch Säure bzw. Salzangriffe.

Wasserstoffversprödung und Kerbwirkung bei mechanischer Belastung treten auch hier als Nachteile auf. Das Messband ist aber masslich stabiler, so dass es auch bei Langzeitgebrauch als zuverlässiger angesehen werden kann. Der hohe Kohlenstoffgehalt in dem Stahl ergibt aufgrund einer dunkelgrauen Ätzfläche darüber hinaus eine gute Ablesbarkeit der Masseinteilung im Neuzustand des Bandes. Durch Scheuern und Ziehen des abgewickelten Bandes auf der Erde wird aber auch hier das Band schnell unlesbar, so dass auch hier die schon vorher beschriebenen Nachteile auftreten.

Weiterhin sind Messbänder aus Kohlenstoffstahl, z.B. C 75, bekannt. Derartige Bänder besitzen den Vorteil, dass sie sich auf der Rolle mit kleinem Durchmesser aufwickeln lassen, weil das Band nur 0,15 bis 0,18 mm Dicke aufweisen kann. Das Rohband aus Kohlenstoffstahl wird phosphatiert, um einmal einen Haftgrund für das Aufdrucken der Masseinteilung abzugeben und anderseits einen Korrosionsschutz zu bewirken. Gewöhnlich werden derartige phosphatierte Rohbänder zunächst weiss grundiert und sodann mit der Masseinteilung bedruckt. Die Masseinteilung wird noch durch einen Klarlack abgedeckt, der eine Schutzfunktion ausübt. Der wesentliche Vorteil dieser Kohlenstoffbänder liegt in ihrer guten Massstabilität und in der guten Ablesbarkeit der Masseinteilung, so dass beim Messen eine hohe Genauigkeit und Zuverlässigkeit eintritt. Der Druckvorgang erlaubt zudem eine mehrfarbige Bedruckung des Bandes, so dass beispielsweise die Meterwerte in einer anderen Farbe als die Zentimeterwerte aufgedruckt werden können. Dies erleichtert das sichere Ablesen beträchtlich. Die Nachteile dieses Messbandes bestehen darin, dass die Masseinteilung sehr leicht abgescheuert werden kann. Das Band besitzt eine geringe Widerstandsfähigkeit gegen mechanische Belastung, insbesondere gegen Biegung. Demzufolge handelt es sich um ein im Neuzustand zwar besonders gutes Band, welches aber bei entsprechendem Gebrauch sehr schnell seinen Gebrauchswert verliert, weil die Masseinteilung schnell kontrastarm und schwer lesbar wird.

Um diesen gerade beschriebenen Nachteilen entgegenzuwirken, werden Rohbänder aus Kohlenstoffstahl auch noch in anderer Weise zu Messbändern verarbeitet. Es erfolgt auch hier eine Phosphatierung des Rohbandes, eine Grundierung und ein Aufdrucken der Messeinteilung. Schliesslich aber wird das gesamte Messband vollständig mit Kunststoff ummantelt, wobei in der Regel Polyamid eingesetzt wird. Somit weist ein auf diese Weise ausgerüstetes Messband nicht nur eine hervorragende Massstabilität und gute Lesbarkeit auf. Es ist auch dauerhaft und verschleissunanfälliger. Durch die Ummantelung mit dem Kunststoff wird auch ein weiterer Schutz gegen Biegebeanspruchung erreicht. Der Nachteil dieses Bandes besteht darin, dass es in ummanteltem Zustand etwa 0,5 mm Dicke aufweist und sich demzufolge ein beachtlicher, grosser Rollendurchmesser beim Aufwickeln des Bandes auf einer Rolle ergibt. Da dieser Rollendurchmesser ganz aus dem Rahmen des Üblichen fällt, bedarf es erheblicher Eingewöhnung, bis derartige Messbänder benutzt werden. Trotzdem entstehen bei einem durch eine Kunststoffummantelung geschützten Messband beim Ziehen des Bandes auf der Erde leicht Kantenverletzungen, so dass eine Angriffstelle an dem Band für Korrosion gebildet ist. Das Band ist rostanfällig. Der Rost wandert durch die verletzte Kante in das Band ein, d.h. zwischen das Rohband und die nachfolgend aufgetragenen Schichten, so dass diese Schichten stellenweise flächenmässig abgehoben werden und das ganze Band daher unbrauchbar wird. Durch die Phosphatierung des Rohbandes wird dieser Korrosionsangriff, wenn er einmal infolge einer Kantenverletzung eingesetzt hat, lediglich verlangsamt.

Der Erfindung liegt die Aufgabe zugrunde, ein Verfahren der eingangs beschriebenen Art zur Herstellung eines korrosionsbeständigen Messbandes so weiterzubilden, dass auch bei Langzeitgebrauch des Messbandes die Massgenauigkeit bei mechanischer und/oder thermischer Belastung nicht unzulässige Werte erreicht.

Erfindungsgemäss wird dies dadurch erreicht, dass das Rohband vor oder nach dem Sandstrahlen und vor dem Aufdrucken einer Masseinteilung ein- oder beidseitig einer künstlichen mechanischen und/oder thermischen Alterung unterworfen wird. Durch dieses Sandstrahlen des Rohbandes mit Kugeln oder Strahlpartikeln in anderer Form werden offenbar die durch das Hartwalzen entstandenen Spannungen bevorzugt im Bereich der Oberfläche abgebaut, es wird also ein Festigkeitsverlust in Kauf genommen. Das Sandstrahlen des Rohbandes und die künstliche Alterung unterstützen sich gegenseitig. Das Ausmass der künstlichen Alterung, insbesondere die Behandlungsdauer, verkürzt sich damit vergleichsweise. Während des Langzeitgebrauchs können sich dann Spannungen im Band nicht mehr lösen. Jedenfalls wurde festgestellt, dass bei Anwendung des erfindungsgemässen Verfahrensschrittes überraschenderweise die erforderliche Massstabilität über Langzeitbedingungen bei dem Rohband aus rostbeständigem Stahl, z.B. Werkstoff X 12 Cr Ni 17 7, eintrat. Durch das Sandstrahlen des Rohbandes mit Strahlpartikeln ergibt sich als weiterer Vorteil ein mattes Aussehen der Oberfläche des Messbandes, was in Verbindung mit der aufgedruckten Masseinteilung ein besonders kontrastreiches Aussehen des Messbandes ergibt, so dass die Ablesesicherheit gefördert ist. Als dritter Vorteil des Sandstrahlungsprozesses ist darauf hinzuweisen, dass die bestrahlte Fläche des Rohbandes auch einen optimalen Haftgrund für Farben und Lacke darstellt. Die Masseinteilung wird auf das künstlich gealterte und durch Partikelbestrahlung verfestigte Rohband aufgedruckt, so dass eine ausreichend feste Haftung erzielt wird. Die gedruckte Masseinteilung kann dann zweckmässig durch eine transparente Schutzschicht noch abgedeckt werden. Ein auf diese Weise weiterverarbeitetes Band besitzt den Vorteil, dass es relativ dünnwandig ausgebildet ist und sich daher mit relativ kleinem Durchmesser auf der Rolle aufwickeln lässt. Das Bedrucken kann selbstverständlich mehrfarbig erfolgen. Durch die Sandstrahlung – je nach der Art der Strahlpartikel – bekommt das Rohband eine mehr oder weniger zerklüftete Oberfläche, so dass die Druckfarbe der aufgedruckten Masseinteilung hierin verankert wird. Infolgedessen führen Scheuerbewegungen am Messband weit weniger zu einem Abtrag der Druckfarbe und damit der Masseinteilung als bisher. Die Lesbarkeit auf Langzeitgebrauch ist wesentlich verbessert. Als transparente Schutzschicht kann eine Kunststoffschicht Verwendung finden, die aber zweckmässigerweise die Gesamtstärke des Bandes nicht wesentlich erhöhen soll.

Vorteilhaft ist weiterhin, wenn das Rohband vor dem Aufdrucken der Masseinteilung ganzflächig ein- oder beidseitig geätzt wird, auch dabei wird eine künstliche, mechanische und/oder thermische Alterung des Rohbandes durchgeführt und anschliessend die Masseinteilung aufgedruckt. Überraschenderweise hat sich dabei gezeigt, dass offenbar infolge der ganzflächigen Ätzung eine gleichmässigere Einwirkung auf das Rohband erfolgt als bei Anwendung der Maskentechnik. Im Unterschied zum Stand der Technik dient die Ätzung auch nicht der Aufbringung der Masseinteilung, sondern lediglich der Vorbehandlung des Rohbandes, welches im übrigen künstlich gealtert wird. Es entsteht durch die Ätzung eine matte Oberfläche, die einerseits in deutlichem Kontrast zu der später aufgedruckten Masseinteilung steht und zum anderen auch einen ausgezeichneten Haftgrund für die aufzudruckende Masseinteilung abgibt.

Besonders günstig ist es, wenn die ganzflächige Ätzung vor der künstlichen Alterung durchgeführt wird. Offenbar bewirkt die künstliche Alterung mindestens teilweise ein Austreiben der durch die Ätzung verursachten Einwanderung von Wasserstoff. Massliche Änderungen des Bandes vor der künstlichen Alterung sind unbedeutend, da die Masseinteilung sowieso erst später aufgedruckt wird.

Die Bestrahlung des Bandes kann mit kugelförmigen oder scharfkantigen Strahlpartikeln oder mit einer Mischung aus beiden, vorzugsweise mit einer Körnung von 50 bis 250 µm, erfolgen. Durch diese Variation der Strahlpartikel kann die Rauhigkeit der Oberfläche und auch das Aussehen derselben angepasst werden. Wesentlich ist in allen Fällen ein mattes blendungsfreies Aussehen, so dass Spiegelungen beim Gebrauch nicht auftreten. Es ergibt sich damit eine gute Ablesbarkeit bei Gebrauch des Messbandes, auch bei Sonnenschein.

Die Erfindung wird anhand eines Ausführungsbeispieles in der Zeichnung dargestellt und im folgenden weiter beschrieben. Es zeigen:

Fig. 1 eine Draufsicht auf einen Ausschnitt des Messbandes, etwa in natürlicher Grösse,

Fig. 2 einen vergrösserten Teilausschnitt des Messbandes nach Fig. 1 und

Fig. 3 einen Schnitt gemäss der Linie III–III in Fig. 2.

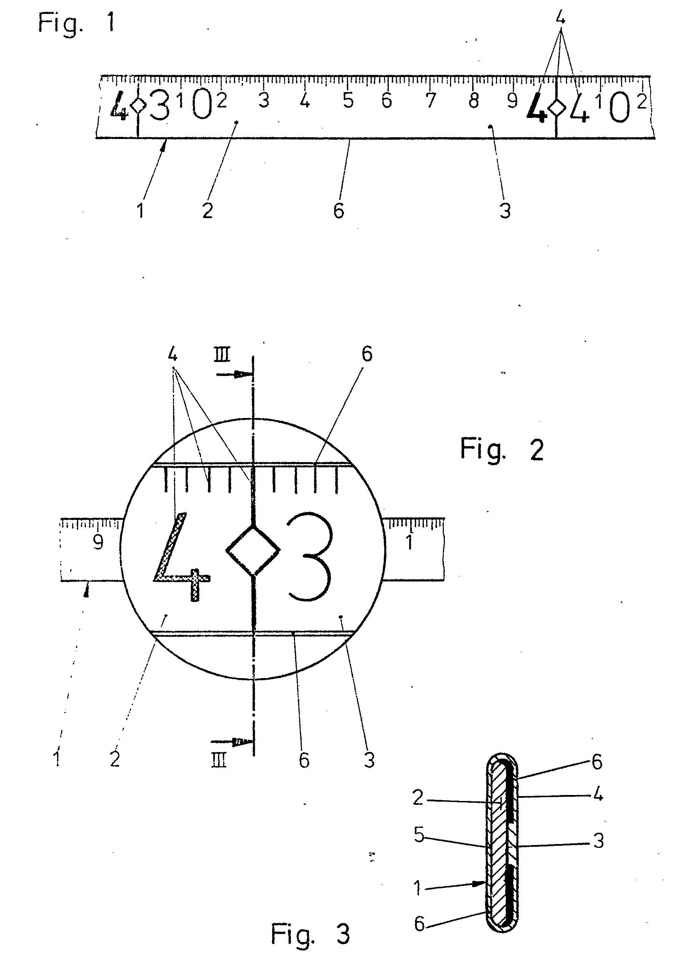

In Fig. 1 ist ein Ausschnitt aus dem Messband 1 dargestellt, welches im einzelnen aus einem blankgewalzten Rohband 2 bestimmter Breite besteht, dessen Oberfläche mit Strahlpartikeln, die kinetische Energie besitzen, behandelt ist. Das Rohband wird vor oder nach der Strahlung einem künstlichen Alterungsprozess unterworfen, der mechanisch und/oder thermisch durchgeführt werden kann. Anschliessend wird auf die gestrahlte und hierdurch matt und zerklüftet gewordene Oberfläche 3 die Masseinteilung 4 aufgedruckt, wobei der Druckvorgang auch mehrfarbig erfolgen kann, indem beispielsweise die Meterangaben rot und die Zentimeterangaben sowie die Striche der Masseinteilung schwarz gedruckt werden. Dies erleichtert die Ablesbarkeit. Im Bedrukken ist aber völlige Freiheit gegeben. Die Druckfarbe haftet infolge der zerklüfteten Oberfläche 3 besonders gut auf dem Rohband 2 und lässt sich auch nicht so leicht abscheuern.

Das Rohband 2 ist nur auf der einen Seite, die in den Fig. 1 und 2 in Draufsicht dargestellt ist, mit Strahlpartikeln bestrahlt worden, während die Rückseite 5 (Fig. 3) glatt bleibt. Es versteht sich, dass selbstverständlich auch beide Oberflächen des Rohbandes 2 einer Strahlung unterworfen werden können. Im allgemeinen ist dies jedoch nicht erforderlich. Infolge des matten Aussehens der Oberfläche 3 ergibt sich eine besonders gute Ablesbarkeit, weil ein starker Kontrast zwischen dieser Oberfläche 3 und der Masseinteilung 4 auftritt.

Das Rohband 2 mit der aufgedruckten Masseinteilung 4 ist allseits von einer Schutzschicht 6 aus transparentem Kunststoff umgeben, wie dies am besten aus Fig. 3 ersichtlich ist.

## Patentansprüche

1. Verfahren zur Herstellung eines Messbandes aus einem hartgewalzten Rohband aus rostbeständigem Stahl, z.B. aus X 12 Cr Ni 17 7, wobei das Rohband auf der für das Aufbringen der Masseinteilung vorgesehenen Oberfläche durch Sandstrahlen aufgerauht und auf diese unebene Oberfläche die Masseinteilung aufgedruckt wird, dadurch gekennzeichnet, dass das Rohband vor oder nach dem Sandstrahlen und vor dem Aufdrucken der Masseinteilung ein- oder beidseitig einer künstlichen mechanischen und/oder thermischen Alterung unterworfen wird.

2. Verfahren nach Anspruch 1, dadurch gekennzeichnet, dass das Rohband vor dem Aufdrucken der Masseinteilung ganzflächig ein- oder beidseitig geätzt wird.

3. Verfahren nach Anspruch 2, dadurch gekennzeichnet, dass die ganzflächige Ätzung vor der künstlichen Alterung durchgeführt wird.

4. Verfahren nach Anspruch 1, dadurch gekennzeichnet, dass die Bestrahlung des Rohbandes mit kugelförmigen oder scharfkantigen Strahlpartikeln oder mit einer Mischung aus beiden, vorzugsweise mit einer Körnung von 50 bis 250 µm, erfolgt.

## Claims

1. A process for manufacturing a measuring tape from a hard-rolled raw tape of rust-resisting steel, for example X 12 Cr Ni 17 7, the raw tape being roughened by sandblasting on the surface envisaged for applying the measuring scale and the latter being imprinted onto this uneven surface, characterised in that the raw tape, before or after the sandblasting and before the imprinting of the measuring scale, is subjected on one side or on both sides to artificial mechanical and/or thermal ageing.

2. Process according to Claim 1, characterised in that, before imprinting the measuring scale, the raw tape is etched over the whole surface on one side or on both sides.

3. Process according to Claim 2, characterised in that the etching over the whole surface is carried out before the artificial ageing.

4. Process according to Claim 1, characterised in that the blasting of the raw tape is carried out with spherical or sharp-edged abrasive particles or with a mixture of the two, preferably having a grain size of 50 to 250 µm.

**Revendications**

1. Procédé de fabrication d'un mètre à ruban à partir d'un ruban brut laminé dur en acier résistant à l'oxydation, par exemple en X 12 Cr Ni 17 7, dans lequel le ruban brut est rendu rugueux par sablage sur la surface prévue pour l'impression de la graduation, et la graduation est imprimée sur cette surface non plane, caractérisé en ce qu'avant ou après le sablage, et avant l'impression de la graduation, le ruban brut est soumis sur un ou deux côtés à un vieillissement artificiel, mécanique et/ou thermique.

2. Procédé suivant la revendication 1, caractérisé en ce qu'avant l'impression de la graduation, le ruban brut est passé à l'acide sur toute la surface d'un côté ou des deux.

3. Procédé suivant la revendication 2, caractérisé en ce que le passage à l'acide sur toute la surface s'exécute avant le vieillissement artificiel.

4. Procédé suivant la revendication 1, caractérisé en ce que le sablage du ruban brut s'exécute avec des particules de sablage rondes ou à arêtes vives ou avec un mélange des deux, de préférence avec une granularité de 50 à 250 microns.

Fig. 1

Fig. 2

Fig. 3